# EUROPEAN PATENT APPLICATION

(11) **EP 2 905 387 A1**
(43) Date of publication of application: **12.08.2015**
(21) Application number: 13791331.5
(22) Date of filing: 13.05.2013
(51) Int. Cl.: E03F 3/02, C02F 3/06, E03F 9/00

(54) **PIPE LINE PURIFYING DEVICES AND CONNECTING STRUCTURE FOR PIPE LINE PURIFYING DEVICES**

(30) Priority: 16.05.2012 JP 2012112778; 26.03.2013 JP 2013064758; 19.04.2013 JP 2013088635
(71) Applicant: Sekisui Chemical Co., Ltd., Osaka-shi, Osaka 530-0047 (JP)
(72) Inventor: MATSUBARA Yoshiharu, Kyoto-shi Kyoto 601-8105 (JP); MATSUZAKA Katsuo, Kyoto-shi Kyoto 601-8105 (JP); NASU Hideyuki, Ritto-shi Shiga 520-3081 (JP)
(74) Representative: Hart-Davis, Jason
(86) International application number: PCT/JP2013/063256
(87) International publication number: WO 2013/172288

(57) **Abstract**

The present invention is to provide an in-pipe purification apparatus which can purify sewage at low cost and with high efficiency. Further, the present invention is to provide a connection structure of in-pipe purification apparatuses, which structure can realize both excellent flowing performance and excellent purifying performance.

The in-pipe purification apparatus according to the present invention includes a volume flow rate-securing section which secures a volume flow rate of water and which has water permeability, and a water purification section which is located below the volume flow rate-securing section and which purifies water supplied from the volume flow rate-securing section, the volume flow rate-securing section having an opening section through which the water is supplied from the volume flow rate-securing section to the water purification section.

## Description

### TECHNICAL FIELD

The present invention relates to an in-pipe purification apparatus which can purify sewage at low cost and with high efficiency. Also, the present invention relates to a connection structure of the in-pipe purification apparatus which can realize both excellent flowing performance and excellent purifying performance.

### BACKGROUND ART

Conventionally, sewage is transported to a sewage treatment facility by a pipeline, and all sewage purification treatments are performed in the sewage treatment facility. Therefore, in the sewage treatment facility, the facility cost and facility space are required in association with the purification facility.

In recent years, a method for purifying sewage in a pipeline by using microorganisms has been proposed in order to reduce the load of the sewage treatment facility. For example, Patent Literature 1 discloses a sewage purification apparatus for a pipeline, in which sewage is purified in such a manner that a ceramic film containing groups of useful microorganisms is provided on the inner surface of the pipe and that the useful microorganisms are thereby brought into contact with the sewage. Patent Literature 2 discloses a water purification apparatus for a pipeline in which a water permeable fixed bed capable of fixing microorganisms, and oxygen supply means for supplying oxygen into the fixed bed are provided in the pipe, so that, even in a state where the fixed bed is immersed in sewage, oxygen is supplied into the fixed bed to enable the growth of aerobic microorganisms to be promoted. Further, Patent Literature 3 discloses a method for efficiently purifying sewage by increasing the contact area between sewage and microorganisms in such a manner that fins are provided inside a pressure feed pipe, or that a plurality of pipes are provided in the pressure feed pipe.

However, in these methods, the purification efficiency is low because the contact area with microorganisms is still not sufficient and because the time period during which microorganisms and sewage are in contact is short. Further, when the oxygen supply means is used, there is a problem that the facility cost, installation cost, and the like, are increased. Further,
in the water purification apparatus for the pipeline, it is necessary to sufficiently secure the flowing performance of sewage and to prevent damage caused by the stress generated in such a case where the in-pipe purification apparatus is buried in the ground.

### CITATION LIST

### -Patent Literature

Patent Literature 1: JP 8-165704 A
Patent Literature 2: JP 2010-024773 A
Patent Literature 3: JP 6-24799 U

### SUMMARY OF INVENTION

### -Technical Problem

The present invention is to provide an in-pipe purification apparatus which can purify sewage at low cost and with high efficiency. Further, the present invention is to provide a connection structure of the in-pipe purification apparatuses, which structure can realize both excellent flowing performance and excellent purifying performance.

### -Solution to Problem

The present invention is to provide an in-pipe purification apparatus including a volume flow rate-securing section which secures a volume flow rate of water and which has water permeability, and a water purification section which is located below the volume flow rate-securing section and which purifies water supplied from the volume flow rate-securing section, the volume flow rate-securing section having an opening section through which the water is supplied from the volume flow rate-securing section to the water purification section.

In the following, the present invention will be described in detail.

The present inventors have found that the in-pipe purification apparatus having the above-described structure can purify sewage at low cost and with high efficiency, and have completed the present invention.

The in-pipe purification apparatus of the present invention includes a volume flow rate-securing section which secures a volume flow rate of water and which has water permeability, and a water purification section which is located below the volume flow rate-securing section and which purifies water supplied from the volume flow rate-securing section.

Examples of means to give water permeability to the volume flow rate-securing section include methods such as a method of providing opening sections in the volume flow rate-securing section.

The ratio of the opening sections with respect to the surface area of the volume flow rate-securing section is not limited in particular, but it is preferred that the lower and upper limits of the ratio of the opening sections are set to 5% and 80%, respectively. When the occupying ratio of the opening sections is less than 5%, there is a case where the amount of sewage supplied from the volume flow rate-securing section to the water purification section becomes insufficient. When the occupying ratio of the opening sections exceeds 80%, there is a case where the necessary strength of the volume flow rate-securing section is not obtained.

The size of the opening of the opening section provided in the volume flow rate-securing section is not limited in particular, but it is preferred that the lower and upper limits of the size of the opening are set to 1 mm² and 3000 mm², respectively. When the size of the opening is less than 1 mm², there is a case where sufficient water permeability is not exhibited, and thereby the amount of sewage supplied from the volume flow rate-securing section to the water purification sections becomes insufficient. When the size of the opening exceeds 3000 mm², there is a case where microorganism carriers described below flow out into the volume flow rate-securing section.

Examples of the in-pipe purification apparatus having the structure described above include an in-pipe purification apparatus (hereinafter also referred to as an in-pipe purification apparatus having a double pipe structure) which has a double pipe structure consisting of an outer pipe and an inner pipe having water permeability, and which is configured such that the inside of the inner pipe serves as the volume flow rate-securing section, and such that the opening between the outer pipe and the inner pipe serves as the water purification section, and an in-pipe purification apparatus (hereinafter also referred to as an in-pipe purification apparatus having a partition) which has a water-permeable partition for dividing the inside of the pipe into an upper section and a lower section, and which is configured such that the upper section serves as the volume flow rate-securing section, and such that the lower section serves as the water purification section.

Note that the pipeline in the present invention is a pipe for transporting fluid, and the like, and includes not only a conduit having a closed cross section but also an open ditch (a water passage on which no lid is mounted or on which a lid is detachably mounted), and a culvert (an underground water passage).

In the in-pipe purification apparatus which has the above-described double pipe structure, the inner pipe has a role as a flow passage after supply of sewage into the pipe and has a role of supplying the sewage to the space between the inner pipe and the outer pipe so that the sewage supplied from the inner pipe is made to flow between the inner pipe and the outer pipe while being purified.

The material forming the inner pipe is not limited in particular as long as the material can be used as a sewer pipeline. Examples of the material forming the inner pipe include a resin, such as polyethylene and polyvinyl chloride, fiber-reinforced plastics, a metal, such as steel, and ductile cast iron, a reinforced concrete (Hume pipe), and the like.

The pipe radial direction cross-sectional shape of the inner pipe is not limited in particular as long as the cross-sectional shape can be used for a sewer pipeline. Examples of the inner pipe include pipes having closed cross-sectional shapes, such as a rectangular shape, a circular shape, and an egg shape, but a pipe having a cross-sectional shape of a circular shape is preferred.

The pipe diameter of the inner pipe is not limited in particular, but it is preferred that the lower and upper limits of the pipe diameter of the inner pipe are set to 100 mm and 3000 mm, respectively. When the pipe diameter of the inner pipe is less than 100 mm, there is a case where the transfer of sewage is prevented by solid materials in the sewage.

Note that, in the present specification, "pipe diameter" means the diameter of the circumscribed circle of the inner cross-section of a pipe.

The inner pipe has water permeability.

Examples of means to give water permeability to the inner pipe include methods such as a method of providing opening sections in the inner pipe.

The material forming the outer pipe is not limited in particular as long as the material can be used as a sewer pipeline. Examples of the material forming the outer pipe include a resin, such as polyethylene and polyvinyl chloride, fiber-reinforced plastics, a metal, such as steel, and ductile cast iron, a reinforced concrete (Hume pipe), and the like.

The pipe radial direction cross-sectional shape of the outer pipe is not limited in particular as long as the cross-sectional shape can be used for a sewer pipeline. Examples of the outer pipe include pipes having cross-sectional shapes, such as a rectangular shape, a circular shape, and an egg shape, but when the outer pipe is buried in the ground, a pipe having a circular cross-sectional shape is preferred because, in this case, the stress concentration due to the earth pressure is hardly caused. Further, when the outer pipe is not buried in the ground, the outer pipe may be a ditch pipe whose upper portion is continuously opened in the axis direction thereof.

The pipe diameter of the outer pipe is not limited in particular, but it is preferred that the lower and upper limits of the pipe diameter of the outer pipe are set to 120% and 300% of the pipe diameter of the inner pipe, respectively. When the pipe diameter of the outer pipe is less than 120% of the pipe diameter of the inner pipe, there is a case where the purification performance is deteriorated due to such a reason that microorganism carriers cannot be sufficiently filled. When the pipe diameter of the outer pipe exceeds 300% of the pipe diameter of the inner pipe, there is a case where the costs of pipe material, installation, and the like, are increased more than necessary because the pipe diameter of the outer pipe becomes too large for the sewage volume flow rate.

In the in-pipe purification apparatus having the double pipe structure described above, it is preferred that the inner pipe is installed on a mount frame installed in the outer pipe. In the case of such double pipe structure, for example, when the inner pipe and the outer pipe are fixed to each other with bolts, and the like, there is a possibility that the fixed portions are damaged due to the stress concentration caused by the earth pressure at the time when the in-pipe purification apparatus is buried in the ground. As a result of an extensive investigation of the fixing method of the inner pipe, the present inventors have found that an in-pipe purification apparatus, which has excellent flowing performance and which can prevent the damage due to the stress caused at such time when buried in the ground, can be obtained in such a manner that a mount frame is installed in the outer pipe and that the inner pipe is installed on the mount frame.

As the material of the mount frame, it is possible to use the same material as the material of the inner pipe and the outer pipe.

Examples of the shape of the mount frame include a plate shape, a shape having a supporting section and leg sections, a half-pipe shape, and the like. Especially, the plate shape is preferred because of the easiness of machining.

The number of mount frames installed in the outer pipe is not limited in particular, but it is preferred that at least one mount frame is installed in the vicinity of each of the both ends of the outer pipe.

It is preferred that the mount frame is fixed to the outer pipe. When the mount frame is fixed to the outer pipe, it is possible to stably install the inner pipe. Examples of the method of fixing the mount frame to the outer pipe include welding, bonding using an adhesive, bonding using an adhesive putty, and the like.

It is preferred that the mount frame is fixed to the inner pipe. When the mount frame is fixed to the inner pipe, it is possible to prevent the inner pipe from being shifted from the mount frame and to prevent the inner pipe from coming off from the mount frame. As the method of fixing the mount frame to the inner pipe, it is possible to use the same method as the method of fixing the mount frame to the outer pipe.

It is preferred that the contact position between the mount frame and the inner pipe is lower than the center of the inner pipe. When the contact position between the mount frame and the inner pipe is not lower than the center of the inner pipe, there is a case in which the work of installing the inner pipe in the outer pipe becomes difficult, and in which large stress is caused in the mount frame, the inner pipe, and the outer pipe due to the earth pressure at the time when the in-pipe purification apparatus is buried in the ground.

When the upper portion of the inner pipe and the upper portion of the outer pipe are in contact with each other, or when the upper portion of the inner pipe and the upper portion of the outer pipe are fixed by bolts, and the like, there is a case in which large stress is caused due to the earth pressure, and the like, at the time when the in-pipe purification apparatus is buried in the ground, and in which faults, such as a crack or breakage, is thereby caused in the inner pipe or the outer pipe. Therefore, in the in-pipe purification apparatus having the double pipe structure, it is preferred that an opening is provided between the upper portion of the inner pipe and the upper portion of the outer pipe.

In the in-pipe purification apparatus having the partition described above, the upper section in the pipe divided by the partition has a role of a flow passage after supply of sewage into the pipe and a role of supplying the sewage to the lower section, while the lower section in the pipe has a role of purifying the sewage supplied from the upper section and a role of making the sewage flow to the downstream side.

In the in-pipe purification apparatus having the partition described above, examples of the material of the pipe serving as the outer wall of the pipeline include the same material as the material of the in-pipe purification apparatus having the double pipe structure described above. In the following, the pipe serving as the outer wall of the pipeline in the in-pipe purification apparatus having the partition described above is also referred to as an outer pipe.

Examples of the material forming the above-described partition include a resin, such as polyethylene and polyvinyl chloride, fiber-reinforced plastics, a metal, such as steel, and ductile cast iron, a reinforced concrete, and the like.

In order to provide the upper section with excellent flowing performance, it is preferred that the shape of the partition is formed such that the height of the portion in contact with the outer pipe is higher than the height of the portion away from the outer pipe, that is, the height of the central portion of the partition. Further, in the case where the height of the portion of the partition, which portion is in contact with the outer pipe, is higher than the height of the central portion of the partition, the portion of the partition in the vicinity of the outer wall is formed to have water permeability, and the central portion of the partition is formed so as not to have water permeability. Thereby, when microorganism carriers are filled in the lower section serving as a water purification section, immersion of the microorganism carriers in sewage, and exposure of the microorganism carriers to the air can be efficiently repeated according to the water level in the pipe.

Examples of means to give water permeability to the partition include a method of providing opening sections in the partition, and the like.

The size of the opening of the opening section of the partition is not limited in particular, but it is preferred that the lower and upper limits of the opening of the opening section are set to 1 mm² and 3000 mm², respectively. When the size of the opening of the opening section is less than 1 mm², there is a case where sufficient water permeability is not obtained, so that the amount of sewage supplied to the lower section becomes insufficient. When the size of the opening of the opening section exceeds 3000 mm², there is a case in which microorganism carriers are clogged by solid materials in the sewage supplied to the lower section, and in which the microorganism carriers flow out into the upper section.

The partition can be installed in the outer pipe by a known method, such as fitting, welding, and bonding using an adhesive, according to the material, application, and the like.

In the water purification section, examples of the method for purifying sewage include a method of using an aeration device, a method of using microorganisms, and the like. Especially, the method of using microorganisms is preferred because the sewage can be purified without using power, and in the in-pipe purification apparatus of the present invention, it is more preferred that microorganism carriers are filled in the water purification section. When microorganism carriers are filled in the water purification section, a large amount of microorganisms can be held while the outflow of the microorganism carriers is prevented. Thereby, a large BOD (Biochemical Oxygen Demand) removal amount can be obtained.

The "microorganism carrier" described above means a granular material or a small piece material which are used for attachment with aerobic microorganisms, anaerobic microorganisms, and the like. After the lapse of about one to four weeks after the start of flow of sewage, aerobic microorganisms, anaerobic microorganisms, and the like, naturally adhere to the microorganism carrier and propagate.

The material forming the microorganism carrier is not limited in particular, and examples of the material include a resin, such as polyethylene, polypropylene, and polyurethane, ceramics, and the like. Since the microorganism carriers need to have water permeability, it is preferred that, when a hydrophobic material, such as polyethylene and polypropylene, is used, the material is subjected to hydrophilization treatment.

Since the microorganisms need to be brought into efficient contact with oxygen, it is preferred to use, as the material of the microorganism carrier, a material, such as a fibrous body, a foamed body, a porous body, and a net-like body, which has a large specific surface area and which hardly causes clogging.

When a foaming body is used as the microorganism carrier, it is preferred that sewage permeates into the inside of the microorganism carrier. Therefore, it is more preferred to use, as the microorganism carrier, an open-cell foamed body rather than a closed-cell foamed body.

The shape of the microorganism carrier is not limited in particular, and examples of the shape include a spherical shape, a rectangular parallelepiped shape, a cubic shape, a sheet shape, a fiber shape, a net shape, and the like. Further, in order to prevent the flow out of the microorganism carrier and to fix the inner pipe, the microorganism carrier may be further filled in a container, such as a net-like body and a porous pipe (a carrier holding pipe described below), which has high water permeability.

It is preferred that the volume of one microorganism carrier is not less than 25 mm³. When the volume of one microorganism carrier is less than 25 mm³, there is a case where the microorganism carrier flows out together with sewage.

When a fiber-shaped body or a foamed body is used as the material of the microorganism carrier, it is preferred that the material has a high porosity in order to increase the specific surface area. Specifically, a material having porosity higher than 50% is preferred and a material having porosity higher than 80% is more preferred.

Note that, in this specification, the "porosity" means a ratio of openings per unit volume, which ratio is represented by percentage.

It is preferred that the microorganism carriers are repeatedly immersed in the sewage and exposed to the air according to the water level in the pipe. Therefore, in the in-pipe purification apparatus of the present invention, it is preferred that the height and the filling ratio of the microorganism carriers filled in the water purification section are adjusted so that the microorganism carriers can be suitably repeatedly immersed in the sewage and exposed to the air.

In the in-pipe purification apparatus having the double pipe structure, a preferred lower limit of the filling height of the microorganism carriers is 20% of the pipe diameter of the outer pipe. When the filling height of the microorganism carriers is less than 20% of the pipe diameter of the outer pipe, there is a case where high purification performance is not obtained.

The filling ratio of the microorganism carriers is defined by a ratio of the volume of the microorganism carriers with respect to the volume between the outer pipe and the inner pipe. The preferred lower limit of the filling ratio is 10%, and the preferred upper limit of the filling ratio is 100%. When the filling ratio is less than 10%, there is a case where high purification performance is not obtained.

It is preferred that the microorganism carriers are fixed in the water purification section by a carrier holding member having water permeability in order to prevent the outflow of the microorganism carriers, and the like.

Examples of the material of the carrier holding member include polyethylene, polypropylene, and the like. It is preferred that the carrier holding member is a tubular carrier holding pipe which has functions of adjusting and holding the capacity of the water purification section.

The pipe radial direction cross-sectional shape of the carrier holding pipe may be a rectangular shape or a circular shape, but is preferably a circular shape.

A preferred lower limit of the pipe diameter of the carrier holding pipe is twice the size of the microorganism carrier, and a preferred upper limit of the pipe diameter of the carrier holding pipe is 30 times the size of the microorganism carrier. When the pipe diameter of the carrier holding pipe is less than twice the size of the microorganism carrier, there is a case where the microorganism carriers are difficult to be filled in the carrier holding pipe. When the pipe diameter of the carrier holding pipe exceeds 30 times the size of the microorganism carrier, there is a case where the opening between the carrier holding pipes is too large, so that the sewage passes through without going through the microorganism carrier.

The carrier holding pipe has water permeability.

Examples of means to give water permeability to the carrier holding pipe include methods such as a method of providing opening sections in the carrier holding pipe.

The ratio of the opening sections with respect to the surface area of the carrier holding pipe is not limited in particular, but a preferred lower limit is 20%, and a preferred upper limit is 95%. When the occupying ratio of the opening section is less than 20%, there is a case where the amount of sewage supplied to the microorganism carrier becomes insufficient. When the occupying ratio of the opening section exceeds 95%, there is a case where the carrier holding pipe becomes inferior in strength.

The size of the opening of the opening section of the carrier holding pipe is not limited in particular, but a preferred lower limit is 5 mm², and a preferred upper limit is 400 mm². When the size of the opening is less than 5 mm², there is a case where the sewage insufficiently flows into the carrier holding pipe. When the size of the opening exceeds 400 mm², there is a case where the microorganism carrier flows out from the carrier holding pipe.

It is preferred that the in-pipe purification apparatus of the present invention has a plurality of carrier holding members and that openings serving as flow passages are formed between the respective carrier holding members. When openings serving as flow passages are formed between the respective carrier holding members, clogging of the microorganism carriers due to solid materials, and the like, contained in the sewage is less likely to be caused as compared with the case where the microorganism carriers are filled as they are without using the carrier holding members.

It is preferred that the in-pipe purification apparatus of the present invention has, at its bottom portion, a bottom portion continuous opening which is used as a flow passage and which is continuously formed along the pipe axis direction. When the bottom portion continuous opening is provided, it is possible to secure the flowing performance of sewage in the water purification section. Note that, when the mount frame described above is installed in the in-pipe purification apparatus having the double pipe structure, it is preferred that the bottom portion continuous opening is provided between the bottom portion of the outer pipe and the mount frame so as to serve as a flow passage which is continuous in the pipe axis direction.

In order to sufficiently secure the flowing performance in the water purification section and to facilitate maintenance work, such as cleaning in the pipe, it is preferred that the pipe radial direction cross-sectional area of the bottom portion continuous opening is 7 cm² or more. Examples of the method of providing the bottom portion continuous opening include methods, such as a method in which a water-permeable partition is provided between the outer pipe and the inner pipe so that the microorganism carriers are provided substantially on the upper side and the bottom portion continuous opening is provided substantially on the lower side, and a method in which a bottom portion continuous opening holding member having water permeability is installed in an opening between the outer pipe and the inner pipe to divide the opening so that the microorganism carriers are provided substantially on the upper side and the bottom portion continuous opening is provided substantially on the lower side. The bottom portion continuous opening holding member has water permeability similarly to the carrier holding member, and hence the carrier holding member may be used, as it is, as the bottom portion continuous opening holding member without filling the microorganism carriers into the carrier holding member.

One of the present inventions is also a connection structure of in-pipe purification apparatuses of the present invention, in which structure an in-pipe purification apparatus A on the upstream side and an in-pipe purification apparatus B on the downstream side are connected to each other via a manhole having a water passage, and in which the in-pipe purification apparatus A and the in-pipe purification apparatus B are connected to each other at the manhole so that the water flowing through the water purification section of the in-pipe purification apparatus A is made to flow into the volume flow rate-securing section of the in-pipe purification apparatus B.

In the in-pipe purification apparatus of the present invention, water, which is supplied from the volume flow rate-securing section to the water purification section and purified in the water purification section, flows through the water purification section as it is. Therefore, in the in-pipe purification apparatus configured in this way, the amount of water flowing through the volume flow rate-securing section is reduced toward the downstream side, so that sufficient flowing performance is not obtained. As a result of an extensive investigation in this respect, the present inventors have found that it is possible to realize both excellent flowing performance and excellent purification performance in such a manner that the in-pipe purification apparatuses are connected to each other at a manhole so as to allow the water flowing through the water purification section of the in-pipe purification apparatus on the upstream side to flow into the volume flow rate-securing section of the in-pipe purification apparatus on the downstream side, and that the water once supplied to the water purification section is thereby again returned to the volume flow rate-securing section.

The connection structure of in-pipe purification apparatuses of the present invention includes a structure in which an in-pipe purification apparatus A on the upstream side and an in-pipe purification apparatus B on the downstream side are connected to each other via a manhole having a water passage.

In the connection structure of in-pipe purification apparatuses of the present invention, the in-pipe purification apparatus A and the in-pipe purification apparatus B are connected to each other at the manhole so that water flowing through the water purification section of the in-pipe purification apparatus A is made to flow into the volume flow rate-securing section of the in-pipe purification apparatus B. With such manhole, water, which is supplied from the volume flow rate-securing section to the water purification section of the in-pipe purification apparatus A so as to flow, as it is, through the water purification section of the in-pipe purification apparatus A, is supplied to the volume flow rate-securing section of the in-pipe purification apparatus B. Thereby, excellent purification performance can be exhibited without lowering the flowing performance.

It is preferred that all of the water flowing through the water purification section of the in-pipe purification apparatus A is supplied to the volume flow rate-securing section of the in-pipe purification apparatus B. In order to secure the flowing performance, it is preferred that at least 50% or more of the water flowing out from the water purification section of the in-pipe purification apparatus A is supplied to the volume flow rate-securing section of the in-pipe purification apparatus B.

As the manhole, a manhole similar to a known manhole used for connection of sewer pipelines can be used except for the connecting section of the in-pipe purification apparatus A and the in-pipe purification apparatus B.

Examples of the method in which, in the manhole, the water flowing through the water purification section of the in-pipe purification apparatus A is made to flow into the volume flow rate-securing section of the in-pipe purification apparatus B, include methods, such as a method of providing a difference in height between the in-pipe purification apparatus A and the in-pipe purification apparatus B which are connected to the manhole, and a method of using an apparatus, such as a pump. Especially, the method of providing a difference in height between the in-pipe purification apparatus A and the in-pipe purification apparatus B is preferred because the method requires no power.

Examples of the method of providing a difference in height between the in-pipe purification apparatus A and the in-pipe purification apparatus B include methods, such as a method of providing, in the manhole, a water passage at a height which is equal to or lower than the height of the water purification section of the in-pipe purification apparatus A, and which is equal to or higher than the height of the volume flow rate-securing section of the in-pipe purification apparatus B. It is preferred that the water purification section of the in-pipe purification apparatus A and the volume flow rate-securing section of the in-pipe purification apparatus B are connected to the water passage of the manhole at the same height.

### -Advantageous Effects of Invention

With the present invention, it is possible to provide an in-pipe purification apparatus which can purify sewage at low cost and with high efficiency. Further, with the present invention, it is possible to provide a connection structure of in-pipe purification apparatuses, which structure can realize both excellent flowing performance and excellent purifying performance.

### BRIEF DESCRIPTION OF DRAWINGS

Fig. 1 is a pipe radial direction cross-sectional view which shows an example of the in-pipe purification apparatus of the present invention, and in which Fig. 1(a) shows a case where the water level is high, and Fig. 1(b) shows the case where the water level is low.
Fig. 2 is a pipe radial direction cross-sectional view showing another example of the in-pipe purification apparatus of the present invention.
Fig. 3 is a pipe radial direction cross-sectional view showing another example of the in-pipe purification apparatus of the present invention.
Fig. 4 is a pipe radial direction cross-sectional view showing another example of the in-pipe purification apparatus of the present invention.
Fig. 5 is a pipe radial direction cross-sectional view of a carrier holding pipe.
Fig. 6 is a pipe radial direction cross-sectional view showing another example of the in-pipe purification apparatus of the present invention.
Fig. 7 is a pipe radial direction cross-sectional view showing another example of the in-pipe purification apparatus of the present invention.
Fig. 8 is a pipe radial direction cross-sectional view which shows another example of the in-pipe purification apparatus of the present invention, and in which Fig. 8(a) shows a case where the water level of the pipe is high, and Fig. 8(b) shows the case where the water level is low.
Fig. 9 is a pipe radial direction cross-sectional view showing another example of the in-pipe purification apparatus of the present invention.
Fig. 10 is a pipe radial direction cross-sectional view showing another example of the in-pipe purification apparatus of the present invention.
Fig. 11 is a pipe radial direction cross-sectional view showing another example of the in-pipe purification apparatus of the present invention.
Fig. 12 is a pipe radial direction cross-sectional view showing an example of the conventional in-pipe purification apparatus.
Fig. 13 shows an example of the installation method of a mount frame in the in-pipe purification apparatus of the present invention, in which Fig. 13(a) is a perspective view and Fig. 13(b) is a pipe radial direction cross-sectional view.
Fig. 14 shows another example of an installation method of a mount frame in the in-pipe purification apparatus of the present invention, in which Fig. 14(a) is a perspective view and Fig. 14(b) is a pipe radial direction cross-sectional view.
Fig. 15 shows another example of an installation method of a mount frame in the in-pipe purification apparatus of the present invention, in which Fig. 15(a) is a perspective view and Fig. 15(b) is a pipe radial direction cross-sectional view.
Fig. 16 is a pipe axial direction cross-sectional view showing an example of the connection structure of the in-pipe purification apparatuses of the present invention.
Fig. 17 is a perspective view showing the example of the connection structure of the in-pipe purification apparatuses of the present invention.
Fig. 18 is a pipe axial direction sectional view showing another example of the connection structure of the in-pipe purification apparatuses of the present invention.

### DESCRIPTION OF EMBODIMENTS

In the following, an in-pipe purification apparatus of the present invention will be described in more detail with reference to the accompanying drawings, but the present invention is not limited only to the embodiments shown in these drawings.

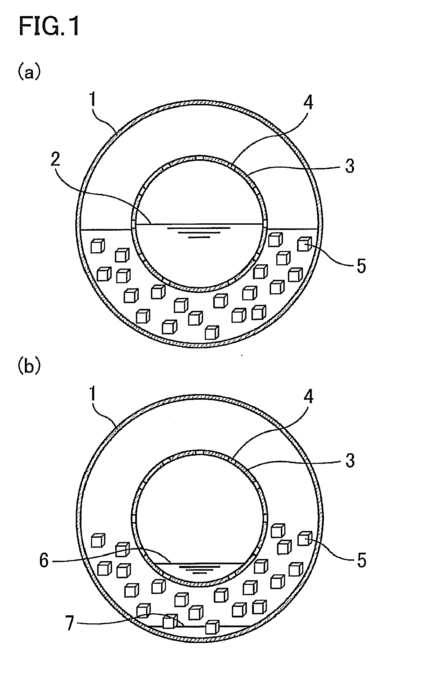

Fig. 1 is a pipe radial direction cross-sectional view showing an example of the in-pipe purification apparatus of the present invention.

As shown in Fig. 1, the in-pipe purification apparatus of the present invention has a double pipe structure formed of an outer pipe 1 and an inner pipe 3 having opening sections 4, and is configured by filling microorganism carriers 5 into the opening of the double pipe structure.

The inner pipe 3 is provided with the opening sections 4, and thereby water permeability is given to the inner pipe 3. When the inner pipe 3 having such water permeability is provided in the outer pipe 1, purification treatment of sewage can be stably performed because a large part of solid materials in the sewage, which are difficult to be decomposed by microorganisms, are transported through the inner pipe 3, and because the sewage, which can be easily decomposed by the microorganisms, is supplied between the inner pipe 3 and the outer pipe 1.

In the in-pipe purification apparatus shown in Fig. 1, the microorganism carriers 5 are repeatedly immersed in the sewage and exposed to the air according to the vertical movement of the level of water in the pipe with the lapse of time. In Fig. 1, the inner pipe 3 is arranged at the central portion of the outer pipe 1, and the microorganism carriers 5 are filled to the height half the pipe diameter of the outer pipe 1. When the water level of the inner pipe 3 is at a water surface 2 (Fig. 1(a)), the water level of the outer pipe 1 becomes slightly lower than the level of water in the inner pipe 3. When the amount of water flowing through the inner pipe 3 is reduced so that the water level of the inner pipe 3 is lowered to a water surface 6 of the inner pipe 3 (Fig. 1(b)), the sewage hardly permeates into the outer pipe 1, and hence the level of water in the outer pipe 1 is lowered to a water surface 7 of the outer pipe 1. At this time, the microorganism carriers 5 can be brought into contact with the air. Since the vertical movement of the level of water in the outer pipe 1 is repeated with the lapse of time, the microorganism carriers 5 are also exposed to the air at the interval corresponding to the vertical movement of the water level, and thereby oxygen required for aerobic decomposition by aerobic microorganisms is supplied. Further, in the state where the microorganism carriers 5 are immersed in the sewage, anaerobic microorganisms propagate, and thereby the sewage can be anaerpbically decomposed.

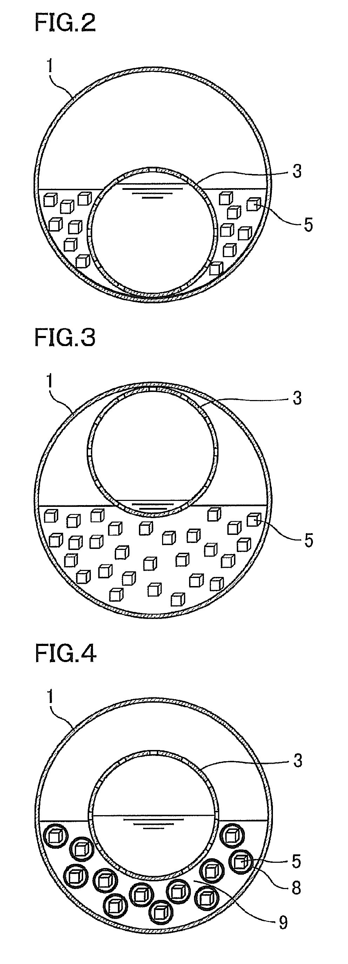

Each of Fig. 2 and Fig. 3 is a pipe radial direction cross-sectional view showing another example of the in-pipe purification apparatus of the present invention.

In the in-pipe purification apparatus of the present invention, the arrangement of the outer pipe 1 and the inner pipe 3 may be changed as shown in Fig. 2 and Fig. 3. When the arrangement of the outer pipe 1 and the inner pipe 3 is changed as shown in Fig. 2, the time period in which the microorganism carriers 5 are in contact with the air is increased, but the filling amount of the microorganism carriers 5 is reduced. On the other hand, when the arrangement of the outer pipe 1 and the inner pipe 3 is changed as shown in Fig. 3, the filling amount of the microorganism carriers 5 is increased, but the time period in which the microorganism carriers 5 are immersed in the sewage is increased. When the arrangement of the outer pipe 1 and the inner pipe 3 is changed in this way, it is possible to perform treatment corresponding to the volume flow rate and properties of sewage.

Fig. 4 is a pipe radial direction cross-sectional view showing another example of the in-pipe purification apparatus of the present invention.

It is preferred that, as shown in Fig. 4, the in-pipe purification apparatus of the present invention is provided with carrier holding pipes 8 in order to maintain an opening between the outer pipe 1 and the inner pipe 3. The carrier holding pipe 8 has sufficient strength to support the weight of the inner pipe 3, and is provided with opening sections so as to allow sewage to easily permeate into the carrier holding pipe 8 from the outer periphery of the carrier holding pipe 8. When the microorganism carriers 5 having small load resistance and a large specific surface area are filled in the carrier holding pipe 8, the carrier holding pipe 8 serves to prevent that the load due to the inner pipe 3 is applied to the microorganism carriers 5 themselves to compact the microorganism carriers 5. When an opening 9 is provided between the carrier holding pipes 8 adjacent to each other, clogging due to the solid materials, and the like, in the sewage is hardly caused as compared with the case where the microorganism carriers 5 are filled as they are.

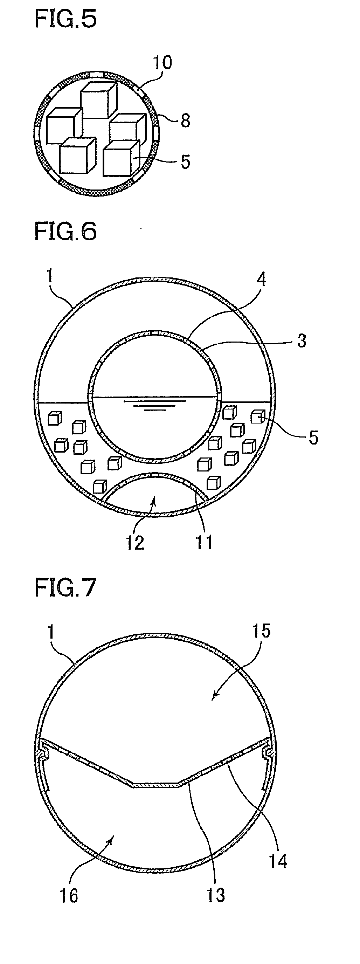

Fig. 5 is a pipe radial direction cross-sectional view of a carrier holding pipe. Fig. 5 shows the carrier holding pipe 8 in which the microorganism carriers 5 are filled. The carrier holding pipe 8 is provided with opening sections 10, and thereby water permeability is given to the carrier holding pipe 8.

Fig. 6 is a pipe radial direction cross-sectional view showing another example of the in-pipe purification apparatus of the present invention. In the in-pipe purification apparatus shown in Fig. 6, a bottom portion continuous opening holding member 11, which has water permeability and which vertically separates the opening between the outer pipe 1 and the inner pipes 3, is provided at the bottom portion of the outer pipe 1. A bottom portion continuous opening 12, which is formed between the bottom portion of the outer pipe 1 and the bottom portion continuous opening holding member 11 provided at the bottom portion of the outer pipe 1, serves as a flow passage, and hence it is possible to sufficiently secure the flowing performance between the outer pipe 1 and the inner pipe 3.

Fig. 7 is a pipe radial direction cross-sectional view showing another example of the in-pipe purification apparatus of the present invention.

The in-pipe purification apparatus of the present invention has a structure in which, as shown in Fig. 7, the outer pipe 1 is divided into an upper section 15 and a lower section 16 by a partition 13.

The partition 13 is provided with opening sections 14, and thereby water permeability is given to the partition 13. When the partition 13 having such water permeability is provided, a large part of the solid materials in sewage are transported by the upper section 15, and the sewage containing a small ratio of the solid materials is supplied into the lower section 16. Thereby, it is possible to stably perform the purification treatment of the sewage.

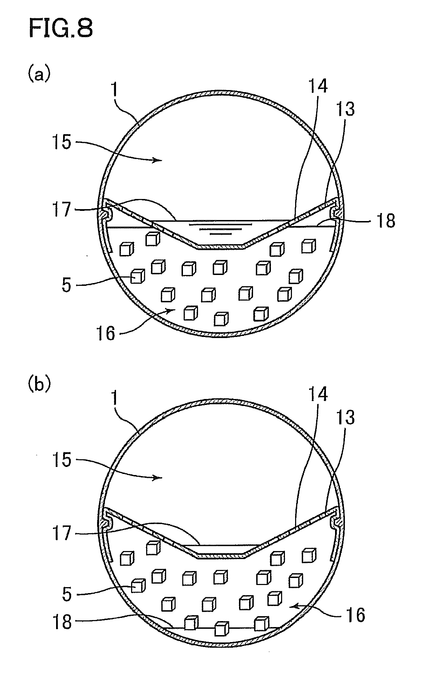

Fig. 8 is a pipe radial direction cross-sectional view which shows another example of the in-pipe purification apparatus of the present invention, and in which Fig. 8(a) shows a case where the water level in the pipe is high, and Fig. 8(b) shows the case where the water level is low. In the case where, as shown in Fig. 8, the microorganism carriers 5 are filled in the lower section 16 to purify the sewage, stable purification performance is obtained, as described above, in such a manner that a large part of solid materials, which are difficult to be decomposed by the microorganisms, are transported by the upper section 15, and that the sewage, which contains a small ratio of the solid materials and which is easily decomposed by the microorganisms, is supplied to the lower section 16.

In the in-pipe purification apparatus shown in Fig. 8, the microorganism carriers 5 are repeatedly immersed in the sewage and exposed to the air as the level of water in the pipe is vertically moved with the lapse of time. In Fig. 8, the height of the portion of the partition 13, which portion is in contact with the outer pipe 1, is higher than the height of the portion of the partition 13, which portion is separated from the outer pipe 1, that is, the central portion of the partition 13, and hence the upper section 15 has excellent flowing performance. Further, the partition 13 is configured such that the opening sections are provided in the vicinity of the portion of the partition 13, which portion is in contact with the outer pipe 1, and such that no opening section is provided at the central portion of the partition 13. Thereby, the microorganism carriers 5 are repeatedly immersed in the sewage and exposed to the air efficiently according to the water level in the pipe.

When, in the in-pipe purification apparatus shown in Fig. 8, the amount of water flowing through the pipe is large (Fig. 8(a)), the water surface 18 of the lower section 16 becomes slightly lower than the water surface 17 of the upper section 15. When the amount of water flowing through the pipe is small (Fig. 8 (b)), almost no sewage is supplied to the lower section 16, and hence the water level of the lower section 16 is lowered. At this time, the microorganism carriers 5 are brought into contact with the air. Since the vertical movement of the water level of the lower section 16 is repeated with the lapse of time, the microorganism carriers 5 are also exposed to the air according to this vertical movement, and thereby oxygen required for aerobic decomposition by aerobic microorganisms is supplied. Further, in the state where the microorganism carriers 5 are immersed in the sewage, anaerobic microorganisms propagate, and thereby the sewage can be anaerobically decomposed.

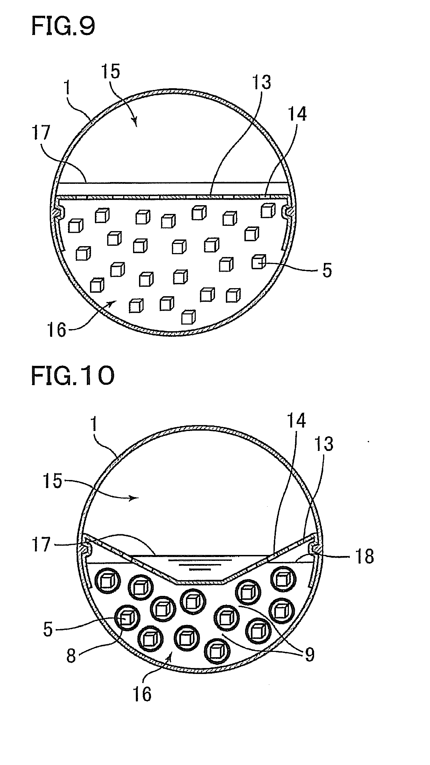

Fig. 9 is a pipe radial direction cross-sectional view showing another example of the in-pipe purification apparatus of the present invention. In the in-pipe purification apparatus shown in Fig. 9, the height of the partition 13 is fixed, and hence the flowing performance and the purification performance by microorganisms are inferior to those of the in-pipe purification apparatus shown in Fig. 8.

Fig. 10 is a pipe radial direction cross-sectional view showing another example of the in-pipe purification apparatus of the present invention.

In the in-pipe purification apparatus shown in Fig. 10, the microorganism carriers 5 are fixed by the carrier holding pipes 8. When the microorganism carriers 5 are filled in the carrier holding pipe 8, it is possible to prevent the outflow of the microorganism carriers 5. Further, the carrier holding pipes 8 are installed so that the openings 9 serving as flow passages are formed between the respective carrier holding pipes 8. When the openings 9 serve as flow passages, clogging due to the solid materials, and the like, in the sewage is less likely to be caused as compared with the case where the microorganism carriers 5 are filled as they are (Fig. 8).

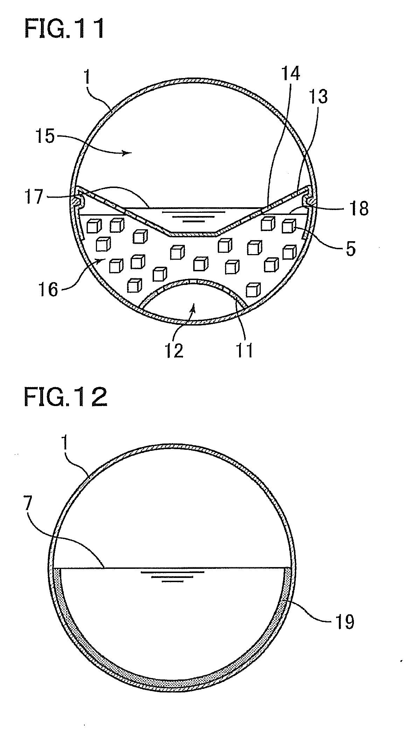

Fig. 11 is a pipe radial direction cross-sectional view showing another example of the in-pipe purification apparatus of the present invention. In the in-pipe purification apparatus shown in Fig. 11, the bottom portion continuous opening holding member 11, which has water permeability and which vertically divides the lower section 16 into two sections, is provided. The bottom portion continuous opening 12, which is formed between the bottom portion of the outer pipe 1 and the bottom portion continuous opening holding member 11 provided in the lower section 16, serves as a flow passage. Therefore, in the in-pipe purification apparatus shown in Fig. 11, the flowing performance of the lower section 16 can be sufficiently secured as compared with the in-pipe purification apparatus shown in Fig. 8.

Fig. 12 is a pipe radial direction cross-sectional view showing an example of the conventional in-pipe purification apparatus. In the in-pipe purification apparatus shown in Fig. 12, neither the inner pipe nor the partition is provided, and a microorganism film 19 is provided on the inner surface of the outer pipe 1. Table 1, Table 2, and Table 3 respectively show the surface area, the BOD load amount, and the BOD removal amount in the conventional in-pipe purification apparatus using the microorganism film as shown in Fig. 12, the pipe using the microorganism carriers as shown in Fig. 1, and the in-pipe purification apparatus using the microorganism carriers as shown in Fig. 8.

**[Table 1]**

| | | |
|---|---|---|
| Pipe diameter | mm | 350 |
| Biological film adhesion height | mm | 175 |
| Surface area | m²/m | 0.55 |
| BOD surface area load | g/m²·d | 5 |
| BOD removal rate | % | 90 |
| BOD removal amount | g/m·d | 2.5 |

**[Table 2]**

| | | |
|---|---|---|
| Pipe diameter of outer pipe | mm | 350 |
| Pipe diameter of inner pipe | mm | 200 |
| Carrier filling height | mm | 175 |
| Carrier filling amount | m³/m | 0.032 |
| Specific surface area | m²/m³ | 3000 |
| Carrier surface area | m²/m | 96 |
| BOD volume load amount | kg/m³·d | 1 |
| BOD removal rate | % | 90 |
| BOD removal amount | g/m·d | 29 |

**[Table 3]**

| | | |
|---|---|---|
| Pipe diameter of outer pipe | mm | 350 |
| Upper section : lower section (volume ratio) | 1:1 | |
| Carrier filling amount | L/m | 40 |
| Specific surface area | m²/m³ | 3000 |
| Carrier surface area | m²/m | 120 |
| BOD volume load amount | kg/m³·d | 1 |
| BOD removal rate | % | 90 |
| BOD removal amount | g/m·d | 29 |

As shown in Table 1, in the case in which, in the in-pipe purification apparatus using the microorganism film as shown in Fig. 12, the microorganism film is stuck to one half of the inner surface of the pipe having a pipe diameter of 350 mm, the microorganism film surface area per 1 m of the outer pipe is 0.55 m²/m.

On the other hand, as shown in Table 2, in the case in which, in the in-pipe purification apparatus using the microorganism carrier as shown in Fig. 1, an outer pipe having a pipe diameter of 350 mm and an inner pipe having a pipe diameter of 200 mm are used, and in which the half of the opening between the inner and outer pipes is filled with sponge-like carriers having a specific surface area of 3000 m²/m³ and serving as microorganism carriers, the carrier surface area per 1 m of the outer pipe in the pipe axis direction becomes 96 m²/m. In this way, in the case in which microorganism carriers having a large specific surface area are filled in the opening in the double pipe structure, it is possible to secure the carrier surface area which is 100 times or more the carrier surface area in the case of using the biological film stuck to the inner surface of the pipe.

Further, as shown in Table 3, in the case in which, in the in-pipe purification apparatus using the microorganism carrier as shown in Fig. 8, the inside of the outer pipe having a pipe diameter of 350 mm is divided by the partition so that volume ratio of the upper section and the lower section becomes 1 : 1, in which the microorganism carriers are filled so that the filling amount of the microorganism carriers becomes 40 L/m, and in which a sponge-like carrier having a specific surface area of 3000 m²/m³ is used as the microorganism carrier, the carrier surface area per 1 m of the lower section becomes 120 m²/m. In this way, in the case in which microorganism carriers having a large specific surface area are filled in the lower section, it is possible to secure the carrier surface area which is 100 times or more the carrier surface area in the case of using the biological film stuck to the inner surface of the pipe.

As shown in Table 1, when the BOD surface area load amount and the BOD removal rate of the microorganism film are respectively set to 5g/m²·d and 90%, the BOD removal amount per one day and per 1 m of the pipe in the pipe axis direction of the in-pipe purification apparatus using the microorganism film as shown in Fig. 12 is estimated to be 2.5 g/m·d. On the other hand, as shown in Tables 2 and 3, when the BOD volume load amount and the BOD removal rate of the microorganism carrier are respectively set to 1 g/m³·d and 90%, the BOD removal amount per one day and per 1 m of the pipe in the pipe axis direction of each of the in-pipe purification apparatuses using the sponge-like microorganism carriers as shown in Fig. 1 and Fig. 8 is estimated to be 29 g/m·d. In this way, when the double pipe structure or the partition and the microorganism carriers are used, it is possible to attain the BOD removal amount as much as 10 times or more the BOD removal amount in the case of using the microorganism film.

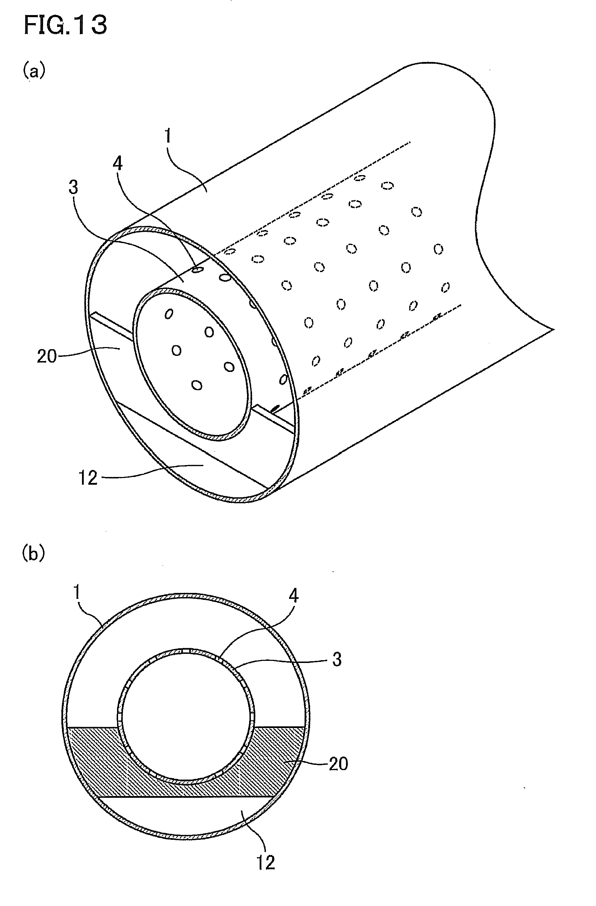

Fig. 13 shows an example of the installation method of a mount frame in an in-pipe purification apparatus of the present invention, in which Fig. 13(a) is a perspective view and Fig. 13(b) is a pipe radial direction cross-sectional view.

In the in-pipe purification apparatus shown in Fig. 13, a plate-like mount frame 20 having a cut-out formed along the shape of the bottom portion of the inner pipe 3 is installed in the outer pipe 1, and the inner pipe 3 is installed on the mount frame 20. A bottom portion continuous opening 12 serving as a flow passage continuous in the pipe axis direction is formed between the plate-like mount frame 20 and the bottom portion of the outer pipe 1, so that the flowing performance of sewage between the outer pipe 1 and the inner pipe 3 is secured.

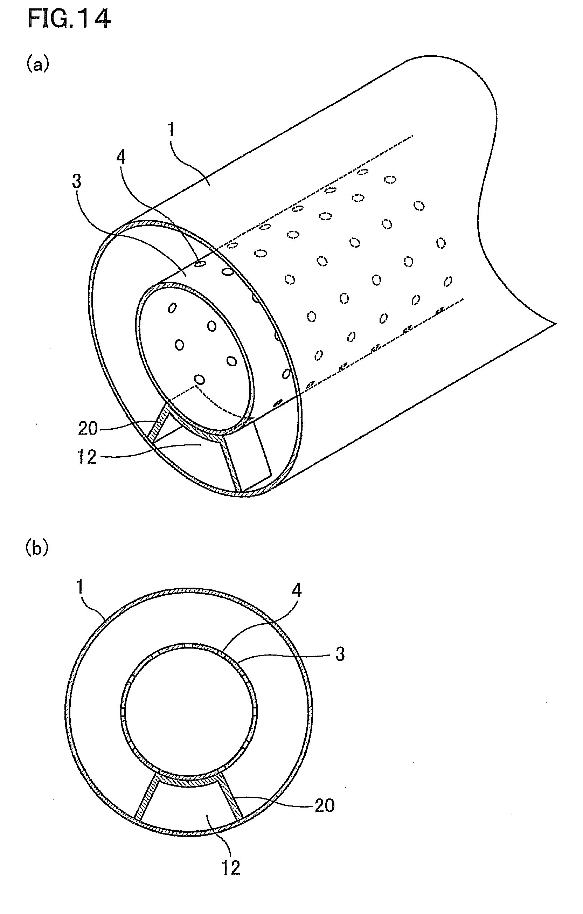

Fig. 14 shows another example of the installation method of a mount frame in an in-pipe purification apparatus of the present invention, in which Fig. 14(a) is a perspective view and Fig. 14(b) is a pipe radial direction cross-sectional view.

In the in-pipe purification apparatus shown in Fig. 14, a mount frame 20, which is provided with leg sections and a supporting section having a shape along the bottom portion of the inner pipe 3, is installed in the outer pipe 1, and the inner pipe 3 is installed on the mount frame 20. When such mount frame 20 is used, it is preferred that the mount frame 20 is fixed to the outer pipe 1 and the inner pipe 3, in order to stably install the inner pipe 3, and in order to prevent the inner pipe 3 from being shifted from the mount frame 20 and to prevent the inner pipe 3 from coming off from the mount frame 20. A bottom portion continuous opening 12 serving as a flow passage continuous in the pipe axis direction is formed between the mount frame 20 and the bottom portion of the outer pipe 1, so that the flowing performance of sewage between the outer pipe 1 and the inner pipe 3 is secured.

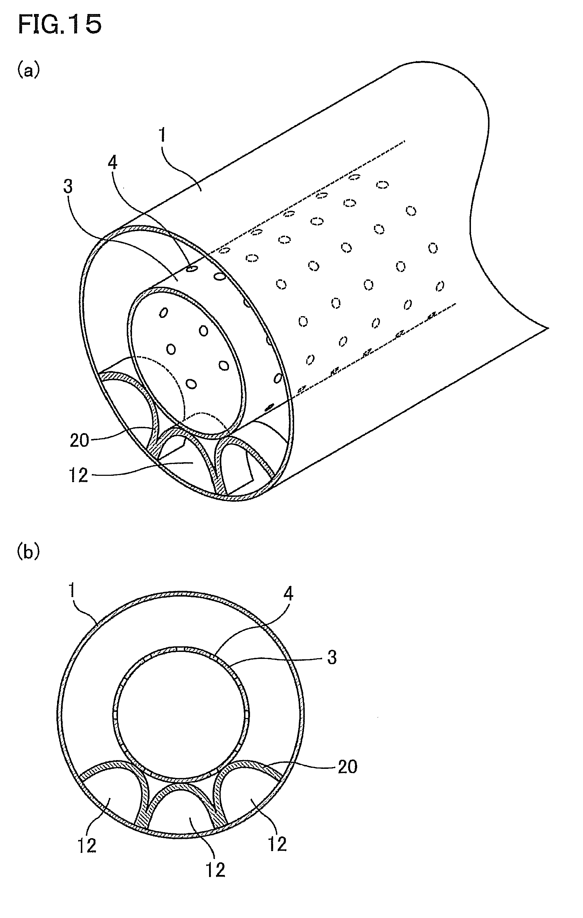

Fig. 15 shows another example of the installation method of a mount frame in an in-pipe purification apparatus of the present invention, in which Fig. 15(a) is a perspective view and Fig. 15(b) is a pipe radial direction cross-sectional view.

In the in-pipe purification apparatus shown in Fig. 15, a mount frame 20 formed by continuously connecting three half pipes (longitudinally halved pipes) is installed in the outer pipe 1, and the inner pipe 3 is installed on the mount frame 20. In the in-pipe purification apparatus shown in Fig. 15, the inner pipe 3 is supported at three points by the three half pipes of the mount frame 20. Between the mount frame 20 and the bottom portion of the outer pipe 1, a bottom portion continuous opening 12 serving as a flow passage continuous in the pipe axis direction is formed by each of the half pipes, so that the flowing performance of sewage between the outer pipe 1 and the inner pipe 3 is secured.

In the in-pipe purification apparatus shown in Figs. 13 to 15, since the contact position between the inner pipe and the mount frame 20 is located below the center of the inner pipe 3, the adhesive strength for supporting the weight of the inner pipe is not necessary, and the work of installing the inner pipe in the outer pipe is also easily performed. Further, an opening is formed between the upper portion of the inner pipe 3, and the upper portion of the outer pipe 1. Thereby, it is possible to prevent faults, such as a crack or breakage, from being caused by the stress concentration due to the earth pressure, or the like, generated in the case where the in-pipe purification apparatus is buried in the ground.

In the in-pipe purification apparatus shown in Figs. 13 to 15, a large opening is provided between the bottom portion of the outer pipe 1 and the inner pipe 3, and hence a large amount of the microorganism carriers can be filled in the opening. When sewage is purified by the microorganism carriers filled between the outer pipe 1 and the inner pipe 3, it is possible, as described above, to obtain stable purification performance in such a manner that a large part of solid materials, which are difficult to be decomposed by the microorganisms, are transported through the inner pipe 3, and that the sewage, in which the content ratio of the solid materials is reduced and which can be easily decomposed by the microorganisms, is supplied between the outer pipe 1 and the inner pipe 3.

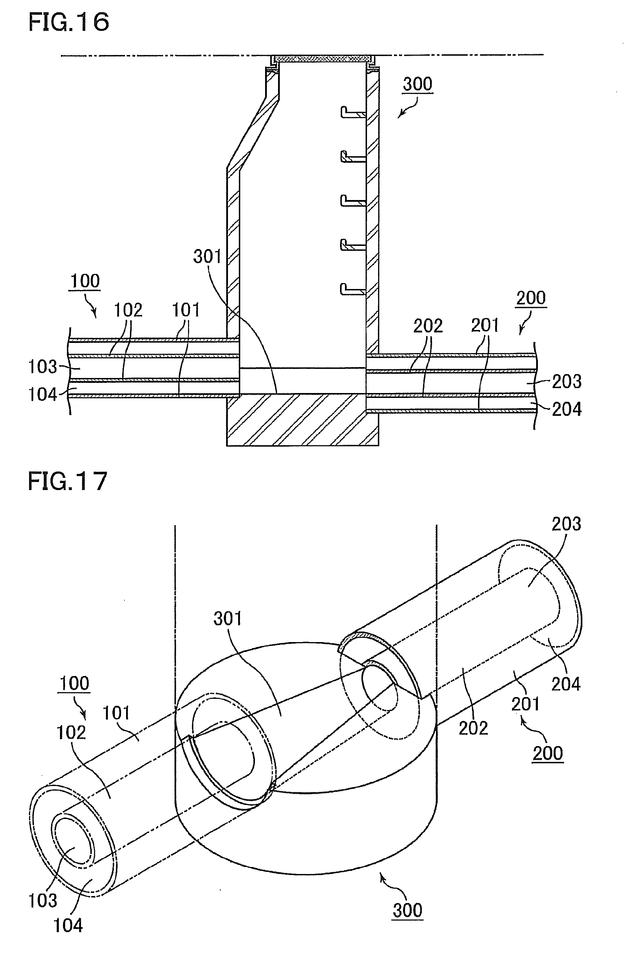

Fig. 16 is a pipe radial direction cross-sectional view showing an example of the connection structure of in-pipe purification apparatuses of the present invention. Fig. 17 is a perspective view showing the example of the connection structure of in-pipe purification apparatuses of the present invention.

As shown in Figs. 16 and 17, the connection structure of in-pipe purification apparatuses of the present invention has a structure in which an in-pipe purification apparatus A 100 on the upstream side, an in-pipe purification apparatus B 200 on the downstream side are connected to each other via a manhole 300 having a water passage 301.

The in-pipe purification apparatus A 100 and the in-pipe purification apparatus B 200, which are connected to each other by the connection structure of in-pipe purification apparatuses shown in Figs. 16 and 17, respectively have a double pipe structure formed by an outer pipe 101 and an inner pipe 102, and a double pipe structure formed by an outer pipe 201 and an inner pipe 202. In the in-pipe purification apparatus A 100 and the in-pipe purification apparatus B 200, which are shown in Figs. 16 and 17, the insides of the inner pipes 102 and 202 respectively serve as volume flow rate-securing sections 103 and 203, and the opening between the outer pipe 101 and the inner pipe 102, and the opening between the outer pipe 201 and the inner pipe 202 respectively serve as water purifying sections 104 and 204.

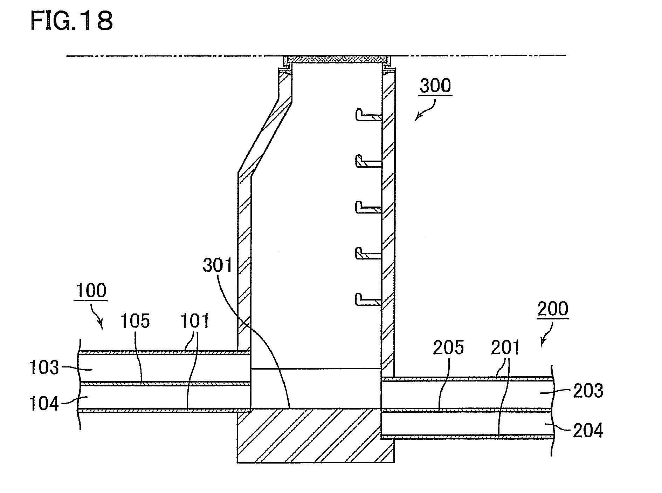

Fig. 18 is a pipe axis direction sectional view showing another example of a connection structure of in-pipe purification apparatuses of the present invention.

An in-pipe purification apparatus A 100 and an in-pipe purification apparatus B 200, which are connected to each other by the connection structure of in-pipe purification apparatuses shown in Fig. 18, are configured such that each of outer pipes 101 and 201 is divided into an upper section and a lower section by each of partitions 105 and 205. In the in-pipe purification apparatus A 100 and the in-pipe purification apparatus B 200 which are shown in Fig. 18, the upper sections respectively serve as volume flow rate-securing sections 103 and 203, and the lower sections respectively serve as water purifying sections 104 and 204.

In Fig. 18, the partitions 105 and 205 are provided with opening sections, and the like, and thereby water permeability is given to the partitions 105 and 205. When the partitions 105 and 205 having water permeability are provided, a large part of solid materials contained in the water are transported by the volume flow rate-securing sections 103 and 203, and water having a lower content ratio of the solid materials is supplied to the water purifying sections 104 and 204. Thereby, in the in-pipe purification apparatuses A 100 and B 200 shown in Fig. 18, water purification treatment can be stably performed in the water purifying sections 104 and 204, similarly to the in-pipe purification apparatus A 100 and B 200 shown in Figs. 16 and 17.

The in-pipe purification apparatus A 100 and the in-pipe purification apparatus B 200 which are shown in Figs. 16 and 17 respectively have large openings between the bottom portion of the outer pipe 101 and the inner pipe 102, and between the bottom portion of the outer pipe 201 and the inner pipe 202, and hence the openings can be filled with a large amount of microorganism carriers so as to serve as the water purifying sections 104 and 204, respectively. When sewage is purified by the microorganism carriers filled in the water purifying sections 104 and 204, it is possible, as described above, to obtain stable purification performance, in such a manner that a large part of solid materials, which are difficult to be decomposed by microorganisms, are transported by the volume flow rate-securing sections 103 and 203, and that the sewage, which has a low content ratio of the solid materials and which is easily decomposed by the microorganisms, is supplied to the water purifying sections 104 and 204.

In the connection structure of in-pipe purification apparatuses shown in Figs. 16 to 18, the bottom portion of the outer pipe 101 of the in-pipe purification apparatus A 100 on the upstream side and the bottom portion of the inner pipe 202 of the in-pipe purification apparatus B 200 on the downstream side are connected to each other by the water passage 301 of the manhole 300. In such structure, the water once supplied to the water purifying section 104 from the volume flow rate-securing section 103 of the in-pipe purification apparatus A 100 is supplied to the volume flow rate-securing section 203 of the in-pipe purification apparatus B 200 through the water passage 301 of the manhole 300. Thereby, excellent purification performance can be exhibited without lowering the flowing performance.

### INDUSTRIAL APPLICABILITY

With the present invention, it is possible to provide an in-pipe purification apparatus which can purify sewage at low cost and with high efficiency. Further, with the present invention, it is possible to provide a connection structure of in-pipe purification apparatuses, which structure can realize both excellent flowing performance and excellent purifying performance.

### REFERENCE SIGNS LIST

1 Outer pipe
2 Water surface of inner pipe
3 Inner pipe
4 Opening section of inner pipe
5 Microorganism carrier
6 Water surface of inner pipe
7 Water surface of outer pipe
8 Carrier holding pipe
9 Opening (flow passage)
10 Opening section of carrier holding pipe
11 Bottom portion continuous opening holding member
12 Bottom portion continuous opening (flow passage)
13 Partition
14 Opening section of partition
15 Upper section
16 Lower section
17 Water surface of upper section
18 Water surface of lower section
19 Microorganism film
20 Mount frame
100 In-pipe purification apparatus A
101 Outer pipe of in-pipe purification apparatus A
102 Inner pipe of in-pipe purification apparatus A
103 Volume flow rate-securing section of in-pipe purification apparatus A
104 Water purification section of in-pipe purification apparatus A
105 Partition of in-pipe purification apparatus A
200 In-pipe purification apparatus B
201 Outer pipe of in-pipe purification apparatus B
202 Inner pipe of in-pipe purification apparatus B
203 Volume flow rate-securing section of in-pipe purification apparatus B
204 Water purification section of in-pipe purification apparatus B
205 Partition of in-pipe purification apparatus B
300 Manhole
301 Water passage of manhole

## Claims

1. An in-pipe purification apparatus comprising: a volume flow rate-securing section which secures a volume flow rate of water and has water permeability; and a water purification section which is located below the volume flow rate-securing section and purifies water supplied from the volume flow rate-securing section.

2. The in-pipe purification apparatus according to claim 1 comprising a double pipe structure formed of an outer pipe and an inner pipe having water permeability, wherein the inside of the inner pipe serves as the volume flow rate-securing section, and the opening between the outer pipe and the inner pipe serves as the water purification section.

3. The in-pipe purification apparatus according to claim 2, wherein the inner pipe is installed on a mount frame installed in the outer pipe.

4. The in-pipe purification apparatus according to claim 3, wherein the mount frame is fixed to the outer pipe.

5. The in-pipe purification apparatus according to claim 3 or 4, wherein the mount frame is fixed to the inner pipe.

6. The in-pipe purification apparatus according to claim 3, 4, or 5, wherein a contact position of the mount frame and the inner pipe is located lower than the center of the inner pipe.

7. The in-pipe purification apparatus according to claim 2, 3, 4, 5, or 6, wherein an opening is provided between the upper portion of the inner pipe and the upper portion of the outer pipe.

8. The in-pipe purification apparatus according to claim 1, comprising a water-permeable partition which divides the inside of the pipe into an upper section and a lower section, wherein the upper section serves as the volume flow rate-securing section, and the lower section serves as the water purification section.

9. The in-pipe purification apparatus according to claim 1, 2, 3, 4, 5, 6, 7, or 8, wherein microorganism carriers are filled in the water purification section.

10. The in-pipe purification apparatus according to claim 9, wherein the microorganism carriers are repeatedly immersed in sewage and exposed to air according to the level of water in the pipe.

11. The in-pipe purification apparatus according to claim 9 or 10, wherein the microorganism carriers are fixed to the water purification section by a carrier holding member having water permeability.

12. The in-pipe purification apparatus according to claim 11, wherein the carrier holding member is a tubular carrier holding pipe and has functions of adjusting and holding the capacity of the water purification section.

13. The in-pipe purification apparatus according to claim 11 or 12, comprising a plurality of the carrier holding members, wherein openings serving as flow passages are provided between the respective carrier holding members.

14. The in-pipe purification apparatus according to claim 1, 2, 3, 4, 5, 6, 7, 8, 9, 10, 11, 12, or 13, wherein a bottom portion continuous opening serving as a flow passage continuous in the pipe axis direction is provided at a bottom portion of the in-pipe purification apparatus.

15. A connection structure of the in-pipe purification apparatuses according to claim 1, 2, 3, 4, 5, 6, 7, 8, 9, 10, 11, 12, 13, or 14,
wherein an in-pipe purification apparatus A on the upstream side and an in-pipe purification apparatus B on the downstream side are connected to each other via a manhole having a water passage, and
the in-pipe purification apparatus A and the in-pipe purification apparatus B are connected to each other in the manhole so that water flowing through the water purification section of the in-pipe purification apparatus A is made to flow into the volume flow rate-securing section of the in-pipe purification apparatus B.

## Amended claims

### Amended claims under Art. 19.1 PCT

**1.** (Amended) An in-pipe purification apparatus comprising: a volume flow rate-securing section which secures a volume flow rate of water and has water permeability; and a water purification section which is located below the volume flow rate-securing section and purifies water supplied from the volume flow rate-securing section,
the volume flow rate-securing section having an opening section through which the water is supplied from the volume flow rate-securing section to the water purification section.

**2.** The in-pipe purification apparatus according to claim 1 comprising a double pipe structure formed of an outer pipe and an inner pipe having water permeability, wherein the inside of the inner pipe serves as the volume flow rate-securing section, and the opening between the outer pipe and the inner pipe serves as the water purification section.

**3.** The in-pipe purification apparatus according to claim 2, wherein the inner pipe is installed on a mount frame installed in the outer pipe.

**4.** The in-pipe purification apparatus according to claim 3, wherein the mount frame is fixed to the outer pipe.

**5.** The in-pipe purification apparatus according to claim 3 or 4, wherein the mount frame is fixed to the inner pipe.

**6.** The in-pipe purification apparatus according to claim 3, 4, or 5, wherein a contact position of the mount frame and the inner pipe is located lower than the center of the inner pipe.

**7.** The in-pipe purification apparatus according to claim 2, 3, 4, 5, or 6, wherein an opening is provided between the upper portion of the inner pipe and the upper portion of the outer pipe.

**8.** The in-pipe purification apparatus according to claim 1, comprising a water-permeable partition which divides the inside of the pipe into an upper section and a lower section, wherein the upper section serves as the volume flow rate-securing section, and the lower section serves as the water purification section.

**9.** The in-pipe purification apparatus according to claim 1, 2, 3, 4, 5, 6, 7, or 8, wherein microorganism carriers are filled in the water purification section.

**10.** The in-pipe purification apparatus according to claim 9, wherein the microorganism carriers are repeatedly immersed in sewage and exposed to air according to the level of water in the pipe.

**11.** The in-pipe purification apparatus according to claim 9 or 10, wherein the microorganism carriers are fixed to the water purification section by a carrier holding member having water permeability.

**12.** The in-pipe purification apparatus according to claim 11, wherein the carrier holding member is a tubular carrier holding pipe and has functions of adjusting and holding the capacity of the water purification section.

**13.** The in-pipe purification apparatus according to claim 11 or 12, comprising a plurality of the carrier holding members, wherein openings serving as flow passages are provided between the respective carrier holding members.

**14.** The in-pipe purification apparatus according to claim 1, 2, 3, 4, 5, 6, 7, 8, 9, 10, 11, 12, or 13, wherein a bottom portion continuous opening serving as a flow passage continuous in the pipe axis direction is provided at a bottom portion of the in-pipe purification apparatus.

**15.** A connection structure of the in-pipe purification apparatuses according to claim 1, 2, 3, 4, 5, 6, 7, 8, 9, 10, 11, 12, 13, or 14,
wherein an in-pipe purification apparatus A on the upstream side and an in-pipe purification apparatus B on the downstream side are connected to each other via a manhole having a water passage, and
the in-pipe purification apparatus A and the in-pipe purification apparatus B are connected to each other in the manhole so that water flowing through the water purification section of the in-pipe purification apparatus A is made to flow into the volume flow rate-securing section of the in-pipe purification apparatus B.
